# EUROPEAN PATENT SPECIFICATION

(11) **EP 2 402 911 B1**
(45) Date of publication and mention of the grant of the patent: **26.11.2014**
(21) Application number: 10746011.5
(22) Date of filing: 26.02.2010
(51) Int. Cl.: G07B 15/00, G06Q 30/00, G06Q 50/00, G08G 1/00, G08G 1/01, G08G 1/09, G01C 21/00

(54) **ROAD PRICING SYSTEM AND ROAD PRICING METHOD**
SYSTEM UND VERFAHREN ZUR VERMAUTUNG DER STRASSENBENUTZUNG
SYSTÈME DE PÉAGE DE PASSAGE DE ROUTE ET PROCÉDÉ DE PÉAGE DE PASSAGE DE ROUTE

(30) Priority: 27.02.2009 JP 2009045985
(43) Date of publication of application: 04.01.2012
(73) Proprietor: Mitsubishi Heavy Industries, Ltd., Tokyo 108-8215 (JP)
(72) Inventor: MIYAJIMA, Yutaka, Kobe-shi Hyogo 652-8585 (JP); TANIGUCHI, Misao, Kobe-shi Hyogo 652-8585 (JP)
(74) Representative: Henkel, Breuer & Partner
(86) International application number: PCT/JP2010/001324
(87) International publication number: WO 2010/098128

(56) References cited:
- JP-A- 11 213 192
- JP-A- 2006 004 266
- US-A- 5 684 475
- US-A1- 2004 119 609

## Description

### TECHNICAL FIELD

The present invention relates to a road pricing system and a road pricing method for charging a toll to vehicles traveling on a road.

### BACKGROUND ART

Conventionally, a road pricing system has been known, which reduces the traffic volume of vehicles including ordinary vehicles and large vehicles (such as buses and trucks) to resolve traffic congestion and the like. This system has already been put into practice in countries, such as the United Kingdom and Singapore. However, in introduction of the road pricing system, where a restricted area is wide and the number of vehicles is great, or where there are many entrances and exits of roads to the restricted area, it is difficult to install equipments such as poles at entrances and exits of all roads. In particular, in the Tokyo metropolitan area, expressways and local roads crisscross in a complicated manner. Therefore, a conventional road pricing system or the like is hardly put into practice in view of cost and the like. Further, a charging area is considered to vary depending on various factors such as season and time period. However, once the charging area is determined in a conventional road pricing system or the like, it is difficult to change the charging area. Moreover, for example, a driver of a vehicle needs to easily figure out a charging area with the naked eye while driving the vehicle. It is, therefore, necessary to display at an entrance or an exit of a road leading to the charging area that the charging area is present ahead. However, where there are many entrances and exits of roads or where the charging area is changed, as described above, there is a problem in that it is difficult to make such a display.

In order to solve the above problems, a road pricing system which is lower in cost and can be put into practice more efficiently (for example, refer to Patent Document 1) is known. This road pricing system includes: a terminal device mounted on a vehicle; and a charging device to which the terminal device can be connected via a communication unit. The road pricing system charges a vehicle entering a predetermined charging area.

### CITATION LIST

Patent Document 1: Japanese Unexamined Patent Application, First Publication No. 2004-326263

Another road pricing system is known from US 2004/0119609A1.

### DISCLOSURE OF THE INVENTION

### Problems to be Solved by the Invention

However, the road pricing system disclosed in Patent Document 1 applies a charging area to a wide region, and therefore is not effective in coping with a traffic jam resulting from traffic congestion occurring locally in a limited time period. For this reason, a driver cannot avoid a traffic jam autonomously.

The present invention has been made in view of the above situations. An object of the present invention is to provide a road pricing system and a road pricing method for charging a toll to vehicles traveling in a traffic jam zone resulting from traffic congestion occurring locally in a limited time period, and thereby allowing a driver to avoid a traffic jam autonomously.

### Means for Solving the Problems

The invention is defined in the appended claims.

The present invention is a road pricing system which charges a toll fee to a vehicle that has traveled on a road in a predetermined zone. The road pricing system includes: a position detecting unit that detects a position of the vehicle; a vehicle number calculating unit that calculates the number of vehicles present on the road in the predetermined zone based on information on the position of the vehicle detected by the position detecting unit; a traffic jam determining unit that compares the number of vehicles calculated by the vehicle number calculating unit with a predetermined threshold value to determine whether or not the road in the predetermined zone is in a traffic jam; a charging zone setting unit that sets the predetermined zone as a charging zone when the traffic jam determining unit determines that the predetermined zone is in a traffic jam; a charging zone information distributing unit that distributes information indicating that the predetermined zone set by the charging zone setting unit is the charging zone; and a charging unit that charges a toll to the vehicle that has traveled on the road set as the charging zone.

The present invention may further include a traffic jam zone information distributing unit that distributes information indicating that the predetermined zone is in a traffic jam when the traffic jam determining unit determines that the predetermined zone is in a traffic jam.

The present invention is a road pricing method for a computer of a road pricing system to perform a toll charging process in order to charge a toll to a vehicle that has traveled on a road in a predetermined zone. The road pricing system includes a position detecting unit that detects a position of the vehicle. The road pricing method includes: a vehicle number calculating step of calculating the number of vehicles present on the road in the predetermined zone based on information on the position of the vehicle detected by the position detecting unit; a traffic jam determining step of comparing the number of vehicles calculated by the vehicle number calculating step with a predetermined threshold value to determine whether or not the road in the predetermined zone is in a traffic jam; a charging zone setting step of setting the predetermined zone as a charging zone when the predetermined zone is determined to be in a traffic jam in the traffic jam determination step; a charging zone information distributing step of distributing information indicating that the predetermined zone set in the charging zone setting step is the charging zone; and a charging step of charging a toll to the vehicle that has traveled on the road set as the charging zone.

### Effects of the Invention

According to the present invention, a toll is charged to vehicles traveling in a traffic jam zone resulting from traffic congestion occurring locally in a limited time period, thereby urging a driver to avoid a traffic jam autonomously, and therefore enabling quick resolution of a traffic jam.

### BRIEF DESCRIPTION OF THE DRAWINGS

FIG. 1 is a block diagram illustrating a configuration of one embodiment of the present invention.
FIG. 2 is a flowchart illustrating operations of a center system 1 shown in FIG. 1.
FIG. 3 is a flowchart illustrating operations of the center system 1 shown in FIG. 1.
FIG. 4 is a flowchart illustrating operations of the center system 1 shown in FIG. 1.
FIG. 5 is an explanatory view illustrating a configuration of a table stored in a probe data table storing unit 15 shown in FIG. 1.
FIG. 6 is an explanatory view illustrating a display example when a road condition is displayed on a display unit 22 shown in FIG. 1.
FIG. 7 is an explanatory view illustrating a road segment.

### BEST MODE FOR CARRYING OUT THE INVENTION

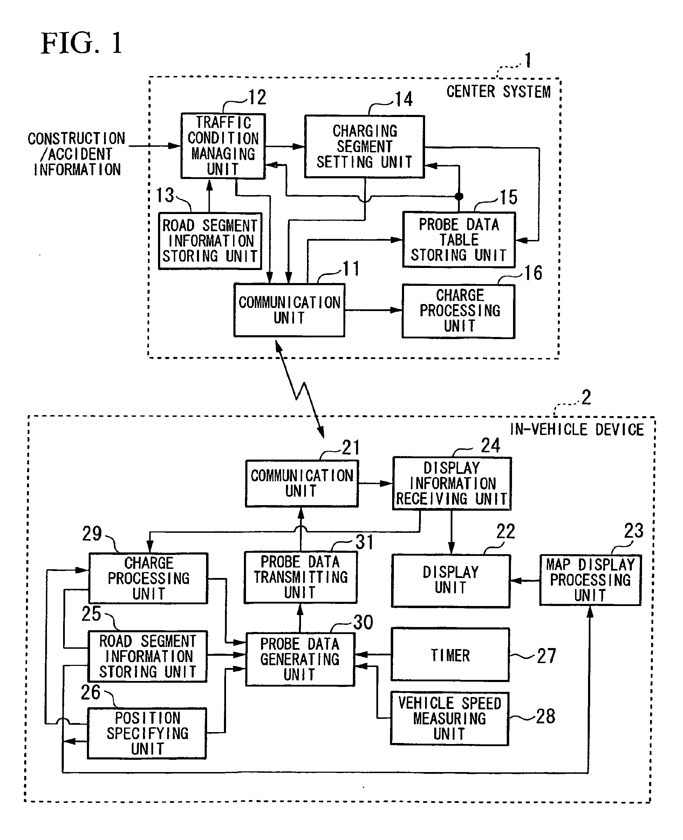

Hereinafter, a road pricing system according to one embodiment of the present invention is explained with reference to drawings. FIG. 1 is a block diagram illustrating a configuration of the embodiment. In this drawing, the reference numeral 1 denotes a center system that sets a charging road zone by allowing the road zone to change dynamically depending on a condition of a traffic jam, and that charges a toll to vehicles which have traveled on a road in the charging zone. The center system includes computer systems. The reference numeral 2 denotes an in-vehicle device mounted on a vehicle (such as an automobile) traveling on a road. The in-vehicle device 2 can perform two-way information communication with the center system 1 using a wireless communication line.

The reference numeral 11 denotes a communication unit which performs information communication with the in-vehicle device 2. The reference numeral 12 denotes a traffic condition managing unit which manages traffic conditions of roads inside a management area to be managed. The management area to be managed is, for example, the Tokyo metropolitan area. The reference numeral 13 denotes a road segment information storing unit which stores positional information of a zone obtained by dividing, among roads within the management area, a road to be managed to a predetermined length (this is referred to as a road segment). The reference numeral 14 denotes a charging segment setting unit which selects a charging road segment depending on the traffic volume of a road, and sets the charging road segment as a charging zone. The reference numeral 15 denotes a probe data table storing unit which stores a table of probe data (data on time, passing point, segment number, passing speed, access state, and the like) transmitted from the in-vehicle device 2. The reference numeral 16 denotes a charge processing unit which performs a charging process on vehicles that have traveled on a road segment set as the charging zone.

The reference numeral 21 denotes a communication unit which performs information communication with the center system. The reference numeral 22 denotes a display unit which includes a liquid-crystal display device, and the like. The reference numeral 23 denotes a map display processing unit which displays, on the display unit 22, a map of an area where the in-vehicle device 2 is present. A navigation system may be used as the map display processing unit. The reference numeral 24 denotes a display information receiving unit which receives information to be displayed which is distributed from the center system 1 via the communication unit 21, and displays the received information on the display unit 22. The reference numeral 25 denotes a road segment information storing unit which stores positional information of a zone obtained by dividing a road to be managed within a management area into a predetermined length (this is referred to as a road segment). The road segment information storing unit stores information similar to that stored in the road segment information storing unit 13 included in the center system 1. The reference numeral 26 denotes a position specifying unit which includes a GPS (global positioning system) receiver, and which outputs the current positional information of the in-vehicle device 2 (latitude/longitude information). The reference numeral 27 denotes a timer which outputs the current time of day. The reference numeral 28 denotes a vehicle speed measuring unit which measures the speed of a vehicle mounted with the in-vehicle device 2. The vehicle speed measuring unit obtains the current vehicle speed by receiving information on the vehicle speed from an engine controller of a vehicle, and the like.

The reference numeral 29 denotes a charge processing unit which determines whether or not a vehicle has traveled on a charging road segment based on information on the current charging road segment which is received by the display information receiving unit 24 and information on the current position specified by the position specifying unit 26, and thereby charges a toll when the vehicle has traveled in the charging zone. The reference numeral 30 denotes a probe data generating unit which receives inputs of identification information of a road segment at which the vehicle is currently present, information on a state of access to the road segment, and charge information when the vehicle has traveled in a charging zone, based on the current time of day output by the timer 27, the current vehicle speed output by the vehicle speed measuring unit 28, and the current position output by the position specifying unit 26. Thereby, the probe data generating unit 30 generates probe data to be transmitted to the center system 1. The reference numeral 31 denotes a probe data transmitting unit which transmits the probe data generated by the probe data generating unit 30 to the center system 1 via the communication unit 21.

When information is transmitted from the center system 1 to the in-vehicle device 2, the information may be distributed using the frequency of broadcasting waves in a broadcasting mode. In this case, the communication unit 11 transmits the information in the broadcasting mode, and the communication unit 21 receives the information distributed in the broadcasting mode.

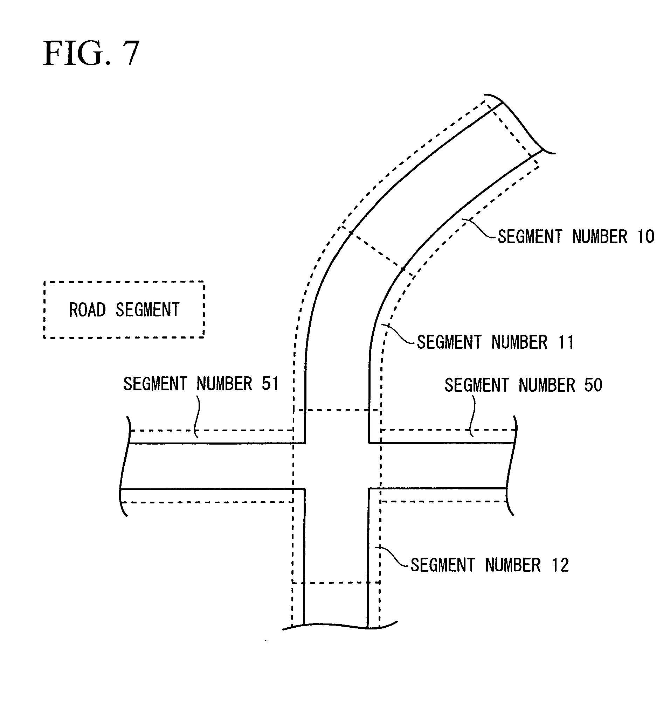

Here, a road segment is explained with reference to FIG. 7. FIG. 7 is a drawing illustrating the profile of a road in the vicinity of an intersection. In FIG. 7, one area enclosed by broken lines is one road segment. In this case, five examples of road segments are shown. A road length of one road segment is set to be approximately 100 meters. Each of the road segments is provided with a segment number which can be uniquely identified. Further, coordinate information capable of specifying a segment number of each road segment and an area enclosed by broken lines are stored in the road segment information storing units 13 and 25, while the segment number is related to the area enclosed by the broken lines.

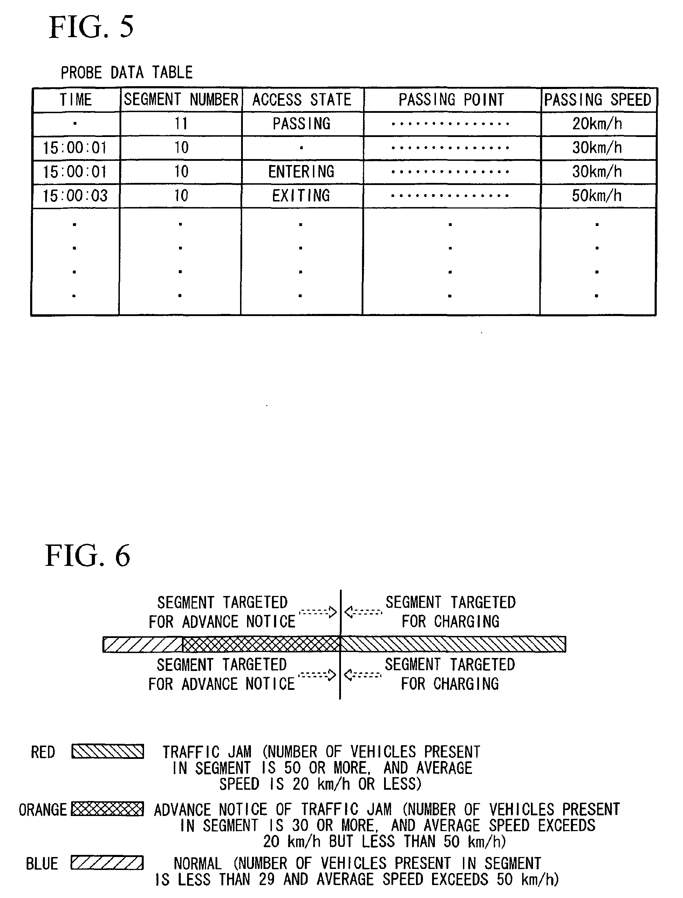

Next, a configuration of the probe data generated by the probe data generating unit 30 is explained with reference to FIG. 5. The probe data generated by the probe data generating unit 30 is transmitted to the center system 1 by the probe data transmitting unit 31, and is registered in the probe data table storing unit 15. FIG. 5 is a drawing which illustrates a structure of the probe data table stored in the probe data table storing unit 15 shown in FIG. 1. As shown in FIG. 5, the probe data includes: data covering the current "time of day"; a "segment number" of a road segment at which a vehicle is currently present; an "access state" with respect to the road segment; a "passing point" expressing, by latitude/longitude information, a position at which the vehicle is currently present; and a "passing speed" when the vehicle has passed through the road segment. The current time of day is time information output by the timer 27. The segment number is a segment number related to a road segment at which the vehicle is currently present, the road segment being obtained by referring to the latitude/longitude information output by the position specifying unit 26 and the coordinate information of the road segment stored in the road segment information storing unit 25. The access state is information which indicates a positional relationship with respect to the road segment. The access state includes any one of a state of "entering" a road segment, a state of "exiting" the road segment, and a state of "passing" through the road segment. The passing point is the latitude/longitude information output by the position specifying unit 26. The passing speed is vehicle speed information output by the vehicle speed measuring unit 28.

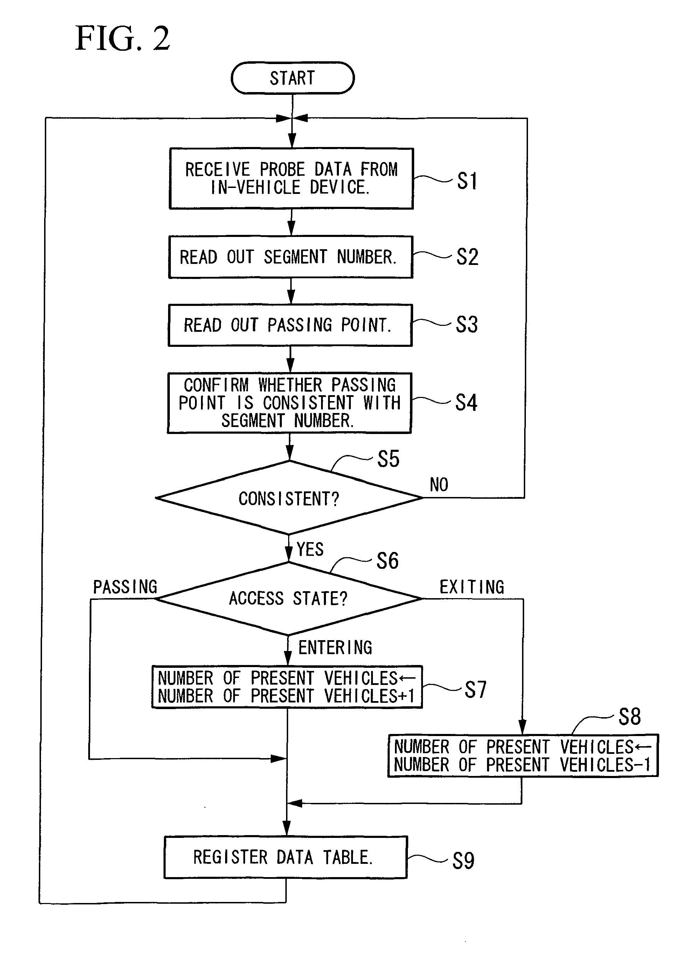

Next, operations for the center system 1 shown in FIG. 1 to calculate the number of vehicles present in each road segment from the probe data transmitted from the in-vehicle device 2 are explained with reference to FIG. 2. First, the probe data generating unit 30 generates probe data at a predetermined time interval (for example, 10 seconds) and transfers the probe data to the probe data transmitting unit 31. Upon receipt of the probe data, the probe data transmitting unit 31 transmits the probe data to the center system 1 via the communication unit 21. The communication unit 11 of the center system 1 receives the probe data (Step S1), and transfers the probe data to the traffic condition managing unit 12. The traffic condition managing unit 12 reads out the segment number and a passing point included in the received probe data (Steps S2 and S3). In addition, the traffic condition managing unit 12 confirms whether or not the passing point (latitude/longitude) is consistent with the segment number by referring to the road segment information stored in the road segment information storing unit 13 (Step S4), and determines whether or not the passing point is consistent with the segment number (Step S5). As a result of this determination, if the passing point is not consistent with the segment number, the received probe data is regarded as wrong probe data and is discarded. Then, the routine returns to Step S 1.

On the other hand, if the passing point is consistent with the segment number, the traffic condition managing unit 12 reads out an access state of the probe data to determine what the access state is (Step S6). As a result of this determination, if the access state is "entering," the number of vehicles present in the road segment having the segment number included in the probe data is incremented (+1) (Step S7). Further, if the access state is "exiting," the number of vehicles present in the road segment having the segment number included in the probe data is decremented (-1) (Step S8). When the access state is "passing," the number of vehicles will not change, and therefore the number of present vehicles remains unchanged. In addition, the traffic condition managing unit 12 registers the received probe data in the probe data table storing unit 15 (Step S9). These operations are performed for the probe data received from all the in-vehicle devices 2, thus making it possible to obtain the number of vehicles present in each of all the road segments.

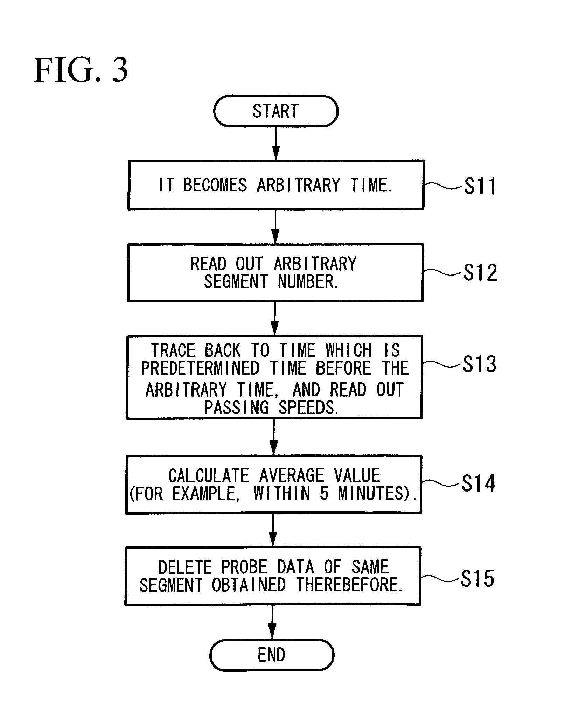

Next, operations for the center system 1 shown in FIG. 1 to calculate a vehicle passing speed at each segment are explained with reference to FIG. 3. First, when it becomes arbitrary time of day (for example, 5-minute cycle) (Step S11), the traffic condition managing unit 12 reads out the probe data of the arbitrary segment number by referring to the probe data stored in the probe data table storing unit 15 (Step S12). Then, the traffic condition managing unit 12 traces back to the time which is a predetermined time (for example, 5 minutes) before the current time of day to read out the passing speed at a road segment having the segment number (Step S 13), and thereby calculates an average value of the passing speed (Step S 14). Thereby, an average passing speed at each road segment can be obtained. Then, from among the probe data of road segments which are stored in the probe data table storing unit 15 and from which the average passing speed has been obtained, the traffic condition managing unit 12 deletes the probe data obtained before the time which is the predetermined time before the current time and from which the average speed has been calculated (Step S 15). In addition, the operations (Steps S11 to S 15) shown in FIG. 3 are to be carried out at a predetermined time interval. The operations are performed for all road segments, thus making it possible to obtain an average passing speed at each road segment.

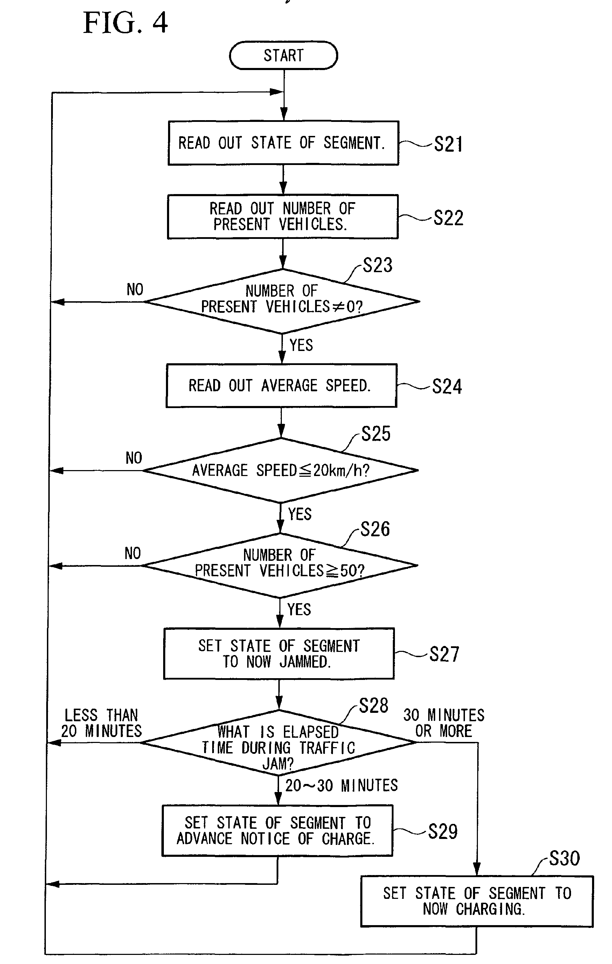

Next, operations for the center system 1 shown in FIG. 1 to set a charging zone (at least one road segment) depending on the level of a traffic jam are explained with reference to FIG. 4. First, the charging segment setting unit 14 reads out information which indicates a state of a road segment obtained by the traffic condition managing unit 12 (Step S21). Then, the charging segment setting unit 14 reads out the number of present vehicles from the read information on the state of the road segment (Step S22). Then, the charging segment setting unit 14 determines whether the number of present vehicles is zero or not (Step S23). As a result of this determination, when the number of present vehicles is zero, the routine returns to Step S21 where the charging segment setting unit 14 reads out information which indicates a state of the next road segment.

On the other hand, when the number of present vehicles is not zero, the charging segment setting unit 14 reads out an average passing speed from the read information on the state of the road segment (Step S24). Then, the charging segment setting unit 14 determines whether or not the average passing speed is 20 km/h or less (Step S25). As a result of this determination, if the average passing speed is not 20 km/h or less, the routine returns to Step S21 where the charging segment setting unit 14 reads out information which indicates a state of the next road segment.

On the other hand, if the average passing speed is 20 km/h or less, the charging segment setting unit 14 determines whether or not the number of present vehicles is 50 or more (Step S26). As a result of this determination, if the number of present vehicles is not 50 or more, the routine returns to Step S21 where the charging segment setting unit 14 reads out information which indicates a state of the next road segment.

On the other hand, if the number of present vehicles is 50 or more, the charging segment setting unit 14 sets "now traffic-jammed" to the state of this road segment (Step S27). In addition, the charging segment setting unit 14 determines elapsed time during the traffic jam (Step S28). As a result of this determination, if the elapsed time from the time when "now traffic-jammed" is set to the state of the road segment in Step S27 is less than 20 minutes, the routine returns to Step S21 without setting the road segment as a charging zone, and the charging segment setting unit 14 reads out information which indicates a state of the next road segment.

Further, if the elapsed time during the traffic jam is 20 minutes or more but less than 30 minutes, the charging segment setting unit 14 sets "advance notice of charge" to the state of this road segment (Step S29). Then, the routine returns to Step S21 where the charging segment setting unit 14 reads out information which indicates a state of the next road segment. Moreover, if the elapsed time during the traffic jam is 30 minutes or more, the charging segment setting unit 14 sets "now charging" to the state of this road segment (Step S30). The routine returns to Step S21 where the charging segment setting unit 14 reads out information which indicates a state of the next road segment. Any one of "no charge," "advance notice of charge," and "now charging" is set for each road segment by the operations.

Next, an operation of distributing information from the center system 1 is explained with reference to FIG. 1. The traffic condition managing unit 12 receives information on road construction or an accident from an external unit, and distributes this information to the in-vehicle device 2 via the communication unit 11. This information includes positional information on construction or an accident which is specified by the road segment number, and this information is distributed. The display information receiving unit 24 receives the distributed information via the communication unit 21. On the other hand, the map display processing unit 23 displays the position of the vehicle concerned on a map displayed on the display unit 22 based on the current positional information output by the position specifying unit 26. Then, the display unit 22 specifies a location of construction or an accident based on the road segment number contained in the information on construction or an accident received by the display information receiving unit 24, and thereby displays the location by superimposing the location on the map displayed on the display unit 22. Thereby, a driver is able to figure out the location of construction or an accident by referring to the map displayed on the display unit 22.

Further, the charging segment setting unit 14 distributes information on charging segments set by the aforementioned operations to the in-vehicle device 2 via the communication unit 11. This information includes information which indicates the segment number for specifying a road segment, and a charging state (one of either "advance notice of charge" or "now charging"). The display information receiving unit 24 receives the distributed information via the communication unit 21. Upon receipt of the information on charging segments, the display information receiving unit 24 specifies a traffic jam location (road segment) based on the road segment number contained in the received information, and thereby displays the location by overlapping the location on the map displayed on the display unit 22. In this case, as shown in FIG. 6, the road segment is displayed on the display unit 22 with different colors so that the charging state can be identified according to the charging state. In an ordinary state which is free from any traffic jams (in a state where the number of vehicles present in a segment is less than 29 and an average speed exceeds 50 km/h), the road segment is displayed in "blue." Additionally, in a state of advance notice of a traffic jam (advance notice of charge) where there is a traffic jam just ahead (in a state where the number of vehicles present within a segment is 30 or more, and an average speed exceeds 20 km/h but less than 50 km/h), the road segment is displayed in "orange" in order to indicate that there is a charging zone just ahead. Further, in a state where there is a traffic jam (in a state where the number of vehicles present within a segment is 50 or more, and an average speed is 20 km/h or less), the road segment is displayed in "red" in order to indicate that a toll is to be charged. A driver is able to figure out by referring to these displays that there is a traffic jam ahead and there is a toll-charging zone.

Next, operations when a vehicle has traveled in a charging zone are explained. The charge processing unit 29 receives information on charging segments received by the display information receiving unit 24, and specifies a currently charging segment from the segment number of a currently charging road contained in this information. Then, the charge processing unit 29 reads out coordinate information on a road segment having this segment number from the road segment information storing unit 25. In addition, the charge processing unit 29 receives the current positional information output by the position specifying unit 26, and determines whether or not the vehicle has traveled on a charging road segment. As a result of this determination, when it is determined that the vehicle has traveled on the charging road segment, the charge processing unit 29 relates the information indicating that the vehicle has traveled on the charging road with the identification number of the in-vehicle device 2 and the segment number of the road segment on which the vehicle has traveled, and thereby outputs the information to the probe data generating unit 30. When the information that the vehicle has traveled on the charging road is output from the charge processing unit 29, the probe data generating unit 30 adds, to probe data to be transmitted periodically, the charge information obtained by relating the information indicating that the vehicle has traveled on the charging road with the identification number of the in-vehicle device 2 and the segment number of the road segment on which the vehicle has traveled, and thereby outputs the probe data to the probe data transmitting unit 31. Upon receipt thereof, the probe data transmitting unit 31 transmits, to the center system 1 via the communication unit 21, the probe data to which the charge information is added.

The communication unit 11 receives the probe data. When the charge information is added to the probe data received by the communication unit 11, the charge processing unit 16 extracts and obtains the charge information. Then, the charge processing unit 16 performs a charging process based on the identification number of the in-vehicle device 2 contained in the received charge information and the segment number of the road segment on which the vehicle has traveled. Since the charging process is performed by a known method, a detailed explanation of the operations is omitted. Thereby, tolls are charged to the vehicles which have traveled on the charging road segment.

As explained above, for the purpose of figuring out traffic conditions, the in-vehicle device 2 mounted on a traveling vehicle transmits the probe data (time of day, passing point, segment number, passing speed, and access state) to the center system 2 via wireless communication, and the center system 1 calculates the traffic volume for the district concerned based on the received probe data. Thus, the pricing system is able to manage traffic conditions. Additionally, the center system 1 determines whether or not the traffic volume exceeds a threshold value for judging the occurrence of a traffic jam. If the traffic volume exceeds the threshold value, the center system 1 concurrently distributes traffic jam information to the vicinity of the district concerned. Thereby, the in-vehicle device which has received the traffic jam information indicates the position of the vehicle concerned on a map, and also indicates a state of traffic congestion on a road with different colors based on the distributed traffic jam information, thereby allowing a driver to avoid a traffic jam autonomously. Further, the center system 1 determines whether or not the traffic volume exceeds a threshold value to be used for dispersing concentration of the traffic volume by toll charge. If the traffic volume exceeds the threshold value, the center system 1 sets the district concerned as a charging zone and notifies a vehicle of this fact, thus making it possible to charge a toll to vehicles traveling in a traffic jam zone resulting from traffic congestion occurring locally in a limited time period, and to prompt a driver to avoid a traffic jam autonomously. As a result, the traffic jam can be resolved quickly.

A program for realizing functions of each processing unit shown in FIG. 1 may be recorded in a computer-readable recording medium so that the program recorded in the recording medium is read and executed by a computer system to perform the toll charging process. The "computer system" includes hardware, such as an OS and peripheral devices. Additionally, the "computer-readable recording medium" includes transportable media, such as a flexible disk, a magneto-optical disk, ROM, and CD-ROM, as well as a memory device, such as a hard-disk built in a computer system. Further, the "computer-readable recording medium" includes a recording medium which stores programs for a certain period, such as a volatile memory (RAM) in a computer system which serves as a server or a client when the programs are transmitted via networks such as the Internet, or communication lines such as telephone lines.

The aforementioned program may be transmitted from a computer system which stores the program in a memory device and the like to other computer systems via a transmission medium or by using transmitting waves in the transmission medium. Here, the "transmission medium" which transmits the program indicates a medium which has functions of transmitting information, for example, a network (communication network) such as the Internet, and communication lines (communication wires) such as telephone lines. Further, the aforementioned program may be a program which can realize some of the above functions. Moreover, the program may be a program which can realize the above functions in combination with a program which has been already recorded in a computer system, that is, a difference file (difference program).

Although preferred embodiments of the present invention have been explained above, the present invention is not limited to the above embodiments. The present invention may be subjected to addition of configuration, omission, replacement, and other modifications without departing from the scope of the present invention. The present invention is not limited to the above description, but will be limited only by the scope of the attached claims.

### INDUSTRIAL APPLICABILITY

The present invention is a road pricing system which charges a toll to a vehicle that has traveled on a road in a predetermined zone. The road pricing system includes: a position detecting unit that detects a position of the vehicle; a vehicle number calculating unit that calculates the number of vehicles present on the road in the predetermined zone based on information on the position of the vehicle detected by the position detecting unit; a traffic jam determining unit that compares the number of vehicles calculated by the vehicle number calculating unit with a predetermined threshold value to determine whether or not the road in the predetermined zone is in a traffic jam; a charging zone setting unit that sets the predetermined zone as a charging zone when the traffic jam determining unit determines that the predetermined zone is in a traffic jam; a charging zone information distributing unit that distributes information indicating that the predetermined zone set by the charging zone setting unit is the charging zone; and a charging unit that charges a toll to the vehicle that has traveled on the road set as the charging zone.

According to the road pricing system of the present invention, it is able to resolve a traffic jam resulting from traffic congestion occurring locally in a limited time period quickly.

### DESCRIPTION OF REFERENCE NUMERALS

1: center system
11: communication unit
12: traffic condition managing unit
13: road segment information storing unit
14: charging segment setting unit
15: probe data table storing unit
16: charge processing unit
2: in-vehicle device
21: communication unit
22: display unit
23: map display processing unit
24: display information receiving unit
25: road segment information storing unit
26: position specifying unit
27: timer
28: vehicle speed measuring unit
29: charge processing unit
30: probe data generating unit
31: probe data transmitting unit

## Claims

1. A road pricing system that charges a toll to a vehicle that has traveled on a road in a predetermined zone, the road pricing system comprising:
a position detecting unit (26) configured to detect a position of the vehicle;
a vehicle number calculating unit (12) configured to calculate the number of vehicles present on the road in the predetermined zone based on information on the position of the vehicle detected by the position detecting unit (26);
a traffic jam determining unit (12) configured to compare the number of vehicles calculated by the vehicle number calculating unit (12) with a predetermined threshold value to determine whether or not the road in the predetermined zone is in a traffic jam;
a charging zone setting unit (14) configured to set the predetermined zone as a charging zone when the traffic jam determining unit (12) determines that the predetermined zone is in a traffic jam;
a charging zone information distributing unit (11) configured to distribute information indicating that the predetermined zone set by the charging zone setting unit (14) is the charging zone;
a charging unit (16) configured to charge a toll to the vehicle that has traveled on the road set as the charging zone;
a map display unit (22) configured to display a map with a road segment with different colors depending on the information distributed by the charging zone information distributing unit.

2. The road pricing system according to claim 1, further comprising:
a traffic jam zone information distributing unit (11) configured to distribute information indicating that the predetermined zone is in a traffic jam when the traffic jam determining unit (12) determines that the predetermined zone is in a traffic jam.

3. A road pricing method for a computer of a road pricing system to perform a toll charging process in order to charge a toll to a vehicle that has traveled on a road in a predetermined zone, the road pricing system comprising a position detecting unit that detects a position of the vehicle, and the road pricing method comprising:
a vehicle number calculating step of calculating the number of vehicles present on the road in the predetermined zone based on information on the position of the vehicle detected by the position detecting unit;
a traffic jam determining step of comparing the number of vehicles calculated in the vehicle number calculating step with a predetermined threshold value to determine whether or not the road in the predetermined zone is in a traffic jam;
a charging zone setting step of setting the predetermined zone as a charging zone when the predetermined zone is determined to be in a traffic jam in the traffic jam determination step;
a charging zone information distributing step of distributing information indicating that the predetermined zone set in the charging zone setting step is the charging zone;
a charging step of charging a toll to the vehicle that has traveled on the road set as the charging zone;
a displaying step for displaying a map with a road segment with different colors depending on the information distributed in the charging zone information distributing step.

## Patentansprüche

1. Straßenmautsystem, das bezüglich eines Fahrzeugs, das auf einer Straße in einer vorbestimmten Zone gefahren ist, eine Mautgebühr erhebt, wobei das Straßenmautsystem aufweist:
eine Positionserfassungseinheit (26), die konfiguriert ist, um eine Position des Fahrzeugs zu erfassen;
eine Fahrzeuganzahl-Berechnungseinheit (12), die konfiguriert ist, um die Anzahl von Fahrzeugen, die sich auf der Straße in der vorbestimmten Zone befinden, basierend auf Informationen über die durch die Positionserfassungseinheit (26) erfasste Position des Fahrzeugs zu berechnen;
eine Verkehrsstau-Bestimmungseinheit (12), die konfiguriert ist, um die durch die Fahrzeuganzahl-Berechnungseinheit (12) berechnete Anzahl von Fahrzeugen mit einem vorbestimmten Schwellenwert zu vergleichen, um zu bestimmen, ob auf der Straße in der vorbestimmte Zone ein Verkehrsstau vorliegt oder nicht;
eine Erhebungszonen-Einstelleinheit (14), die konfiguriert ist, um die vorbestimmte Zone als Erhebungszone einzustellen, wenn die Verkehrsstau-Bestimmungseinheit (12) bestimmt, dass sich in der vorbestimmten Zone ein Verkehrsstau befindet;
eine Erhebungszoneninformationen-Verteilungseinheit (11), die konfiguriert ist, um Informationen zu verteilen, die anzeigen, dass die durch die Erhebungszonen-Einstelleinheit (14) eingestellte vorbestimmte Zone die Erhebungszone ist;
eine Erhebungseinheit (16), die konfiguriert ist, um bezüglich des Fahrzeugs, das auf der als die Erhebungszone eingestellten Straße gefahren ist, eine Mautgebühr zu erheben;
eine Kartenanzeigeeinheit (22), die konfiguriert ist, um eine Karte mit einem Straßensegment mit unterschiedlichen Farben in Abhängigkeit von den durch die Erhebungszoneninformationen-Verteilungseinheit verteilten Informationen anzuzeigen.

2. Straßenmautsystem nach Anspruch 1, ferner aufweisend:
eine Verkehrsstauzoneninformationen-Verteilungseinheit (11), die konfiguriert ist, um Informationen zu verteilen, die anzeigen, dass in der vorbestimmten Zone ein Verkehrsstau vorliegt, wenn die Verkehrsstau-Bestimmungseinheit (12) bestimmt, dass in der vorbestimmten Zone ein Verkehrsstau vorliegt.

3. Straßenmautverfahren für einen Computer eines Straßenmautsystems, um einen Mautgebührenerhebungsprozess durchzuführen, damit bezüglich eines Fahrzeugs, das auf einer Straße in einer vorbestimmten Zone gefahren ist, eine Mautgebühr erhoben wird, wobei das Straßenmautsystem eine Positionserfassungseinheit aufweist, die eine Position des Fahrzeugs erfasst, und wobei das Straßenmautverfahren aufweist:
einen Fahrzeuganzahl-Berechnungsschritt zum Berechnen der Anzahl von Fahrzeugen, die sich auf der Straße in der vorbestimmten Zone befinden, basierend auf Informationen über die durch die Positionserfassungseinheit erfasste Position des Fahrzeugs;
einen Verkehrsstau-Bestimmungsschritt zum Vergleichen der in dem Fahrzeuganzahl-Berechnungsschritt berechneten Anzahl von Fahrzeugen mit einem vorbestimmten Schwellenwert, um zu bestimmten, ob auf der Straße in der vorbestimmte Zone ein Verkehrsstau vorliegt oder nicht;
einen Erhebungszonen-Einstellschritt zum Einstellen der vorbestimmten Zone als Erhebungszone, wenn in dem Verkehrsstau-Bestimmungsschritt bestimmt wird, dass sich in der vorbestimmten Zone ein Verkehrsstau befindet;
einen Erhebungszoneninformationen-Verteilungsschritt zum Verteilen von Informationen, die anzeigen, dass die in dem Erhebungszonen-Einstellschritt eingestellte vorbestimmte Zone die Erhebungszone ist;
einen Erhebungsschritt zum Erheben einer Mautgebühr bezüglich des Fahrzeugs, das auf der als die Erhebungszone eingestellten Straße gefahren ist;
einen Anzeigeschritt zum Anzeigen einer Karte mit einem Straßensegment mit unterschiedlichen Farben in Abhängigkeit von den in dem Erhebungszoneninformationen-Verteilungsschritt verteilten Informationen.

## Revendications

1. Système de tarification routière qui facture un péage à un véhicule qui s'est déplacé sur une route dans une zone prédéterminée, le système de tarification routière comprenant :
une unité de détection de position (26) configurée pour détecter une position du véhicule ;
une unité de calcul de nombre de véhicules (12) configurée pour calculer le nombre de véhicules présents sur la route dans la zone prédéterminée sur la base d'informations sur la position du véhicule détectée par l'unité de détection de position (26) ;
une unité de détermination d'embouteillage (12) configurée pour comparer le nombre de véhicules calculé par l'unité de calcul de nombre de véhicules (12) avec une valeur de seuil prédéterminée pour déterminer si oui ou non la route dans la zone prédéterminée se trouve dans un embouteillage ;
une unité d'établissement de zone de facturation (14) configurée pour établir la zone prédéterminée comme une zone de facturation lorsque l'unité de détermination d'embouteillage (12) détermine que la zone prédéterminée se trouve dans un embouteillage ;
une unité de distribution d'informations de zone de facturation (11) configurée pour distribuer des informations indiquant que la zone prédéterminée établie par l'unité d'établissement de zone de facturation (14) est la zone de facturation ;
une unité de facturation (16) configurée pour facturer un péage au véhicule qui s'est déplacé sur la route établie comme la zone de facturation ;
une unité d'affichage de carte (22) configurée pour afficher une carte avec un segment de route avec des couleurs différentes en fonction des informations distribuées par l'unité de distribution d'informations de zone de facturation.

2. Système de tarification routière selon la revendication 1, comprenant en outre :
une unité de distribution d'informations de zone d'embouteillage (11) configurée pour distribuer des informations indiquant que la zone prédéterminée se trouve dans un embouteillage lorsque l'unité de détermination d'embouteillage (12) détermine que la zone prédéterminée se trouve dans un embouteillage.

3. Procédé de tarification routière pour un ordinateur d'un système de tarification routière pour effectuer un processus de facturation de péage afin de facturer un péage à un véhicule qui s'est déplacé sur une route dans une zone prédéterminée, le système de tarification routière comprenant une unité de détection de position qui détecte une position du véhicule, et le procédé de tarification routière comprenant :
une étape de calcul de nombre de véhicules consistant à calculer le nombre de véhicules présents sur la route dans la zone prédéterminée sur la base d'informations sur la position du véhicule détectée par l'unité de détection de position ;
une étape de détermination d'embouteillage consistant à comparer le nombre de véhicules calculé à l'étape de calcul de nombre de véhicules avec une valeur de seuil prédéterminée pour déterminer si oui ou non la route dans la zone prédéterminée se trouve dans un embouteillage ;
une étape d'établissement de zone de facturation consistant à établir la zone prédéterminée comme une zone de facturation lorsque la zone prédéterminée est déterminée se trouver dans un embouteillage à l'étape de détermination d'embouteillage ;
une étape de distribution d'informations de zone de facturation consistant à distribuer des informations indiquant que la zone prédéterminée établie à l'étape d'établissement de zone de facturation est la zone de facturation ;
une étape de facturation consistant à facturer un péage au véhicule qui s'est déplacé sur la route établie comme la zone de facturation ;
une étape d'affichage pour afficher une carte avec un segment de route avec des couleurs différentes en fonction des informations distribuées à l'étape de distribution d'informations de zone de facturation.
